# EUROPÄISCHE PATENTSCHRIFT

(11) **EP 1 271 139 B1**
(45) Veröffentlichungstag und Bekanntmachung des Hinweises auf die Patenterteilung: **04.03.2009**
(21) Anmeldenummer: 02013854.1
(22) Anmeldetag: 22.06.2002
(51) Int. Cl.: A01D 41/127, G05D 1/02, G01S 13/88, G01S 17/89, G01V 8/10

(54) **Vorrichtung zur Messung der Menge von auf einem Feld stehenden Pflanzen**
Apparatus for measuring the quantity of standing plants in a field
Dispositif de mesure de la quantité de plantes en hauteur dans un champ

(30) Priorität: 28.06.2001 DE 10130665
(43) Veröffentlichungstag der Anmeldung: 02.01.2003
(73) Patentinhaber: DEERE & COMPANY, Moline, Illinois 61265-8098 (US)
(72) Erfinder: Beck, Folker, Dr., Bettendorf, IA 52722 (US)
(74) Vertreter: Holst, Sönke

(56) Entgegenhaltungen:
- EP-A- 0 843 959
- DE-A1- 2 411 153
- DE-A1- 2 608 049
- DE-A1- 19 743 884
- US-A- 6 101 795

## Beschreibung

Die Erfindung betrifft eine Vorrichtung zur Messung der Menge von auf einem Feld stehenden oder liegenden Pflanzen nach dem Oberbegriff des Anspruchs 1.

Bei Erntemaschinen ist zu Zwecken einer selbsttätigen Einstellung von Gutförder- und/oder Gutbearbeitungseinrichtungen eine Messung des Gutdurchsatzes sinnvoll. Der Gutdurchsatz wird häufig auch zu Zwecken der teilflächenspezifischen Bewirtschaftung gemessen. Alternativ oder zusätzlich kann anhand des gemessenen Gutdurchsatzes die Vortriebsgeschwindigkeit der Erntemaschine auf einem Feld durch eine entsprechende Steuerung derart eingestellt werden, dass ein gewünschter Gutdurchsatz, der beispielsweise einer optimalen Auslastung der Erntemaschine entspricht, erreicht wird. Es ist bereits bekannt, den Gutdurchsatz durch entsprechende Sensoren in der Erntemaschine zu ermitteln. Da die Messung erst erfolgt, nachdem das Gut von der Erntemaschine aufgenommen wurde, kann eine sprunghafte Änderung des Gutdurchsatzes bei derartigen Sensoren nicht mehr durch eine entsprechende Anpassung der Fahrgeschwindigkeit ausgeglichen werden, was eine Unter- oder Überlastung von Gutbearbeitungseinrichtungen oder sogar Verstopfungen zur Folge haben kann.

In der DE 26 08 049 A wird vorgeschlagen, bei einer Erntemaschine die Dichte des Gutbestandes auf einem Feld durch Ultraschallsensoren zu messen, die in unmittelbarer Nähe vor der Erntegutaufnahmeeinrichtung angeordnet sind. Ein an einer Seite der Erntegutaufnahmeeinrichtung angeordneter Sender strahlt Ultraschallwellen ab, die sich über die Breite der Erntegutaufnahmeeinrichtung ausbreiten. Der durch einen dem Sender gegenüberliegenden Empfänger erfasste, durch den Gutbestand bedingte Intensitätsverlust der Ultraschallwellen sowie ihre Laufzeit werden ausgewertet und in ein Steuersignal umgewandelt. Wegen der vielfältigen externen Störeinflüsse und Fehlermöglichkeiten haben sich die Ultraschallsensoren in der Praxis nicht bewährt.

Die DE 24 11 153 A beschreibt eine selbstfahrende Erntemaschine mit einem an den Haspeltragarmen angebrachten Messfühler zur Erfassung der Höhe des stehenden Bestands, dessen Messwerte zur Einstellung der Haspelposition herangezogen werden. Es wird weiterhin vorgeschlagen, zusätzliche Messfühler vor der Haspel anzubringen, um u. a. die Ährendichte durch Lichtabsorption oder Ultraschallabsorption zu erfassen und anhand der Ährendichte, Ährenmasse, Halmdichte und Halmmasse die Bestandsdichte zu errechnen und zur Regelung der Fahrgeschwindigkeit oder einer anderen Funktion des Mähdreschers zu verwenden. Hier werden separate Sensoren für die Erfassung der Kontur der Pflanzen und für die Dichte der Halme verwendet.

Die als gattungsbildend angesehene EP 0 887 660 A beschreibt eine Erntemaschine, die mit einer Laser-Entfernungsmessvorrichtung ausgestattet ist. Die an der Fahrerkabine angeordnete Laser-Entfernungsmessvorrichtung tastet einen einige Meter vor der Erntemaschine liegenden Bereich kontinuierlich quer zur Vorwärtsrichtung ab. Anhand des Profils vor der Erntemaschine vorhandenen Guts wird der Querschnitt eines auf dem Boden liegenden Schwads evaluiert. Bei der Getreideernte wird anhand eines Kontursprunges eine Bestandskante identifiziert. Anhand der gemessenen Entfernungswerte wird die Höhe des Getreidebestands ermittelt. Als nachteilig ist dabei anzusehen, dass nur die äußeren Konturen des Getreidefelds berücksichtigt werden. Ein relativ dichter Bestand lässt sich durch die offenbarte Vorrichtung nicht von einem dünnen Bestand mit derselben Höhe unterscheiden.

Die DE 197 43 884 A betrifft eine Landmaschine mit einer Vorrichtung zur berührungslosen Erkennung von Bearbeitungsgrenzen, die einen Lasersensor umfasst, der eine vor der Landmaschine liegende Fläche abrastert. Anhand der Laufzeit und der Intensität bzw. der Phasenverschiebung des reflektierten Lichts wird die Bearbeitungsgrenze erkannt. Die dort beschriebene Vorrichtung eignet sich nicht zur Mengenmessung eines Pflanzenbestandes.

Die der Erfindung zugrunde liegende Aufgabe wird darin gesehen, eine verbesserte Vorrichtung bereitzustellen, die es ermöglicht, die Pflanzenmenge zu messen, bevor das Gut von der Erntemaschine aufgenommen wurde.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung bezieht sich auf eine Vorrichtung, die eingerichtet ist, den Bestand auf einem Feld stehender oder liegender Pflanzen in an sich bekannter Weise durch einen Sender mit elektromagnetischen Wellen (insbesondere Laserstrahlen) zu bestrahlen, mit einem Empfänger die von den Pflanzen reflektierten Wellen orts- bzw. winkelaufgelöst zu erfassen und mittels einer Auswertungseinrichtung aus den Ausgangssignalen des Empfängers die Menge der Pflanzen zu ermitteln. Der Empfänger ist eingerichtet, ein zumindest eindimensional orts- oder winkelaufgelöstes Signal abzugeben, aus dem die Menge berechenbar ist. Auch ein zweidimensionales, mit einer Kamera aufgenommenes Signal wäre denkbar. Dabei können der Sender und der Empfänger in an sich bekannter Weise gemeinsam schrittweise oder kontinuierlich über einen Messbereich bewegt oder verschwenkt werden oder nur einer von ihnen. Der Auswertungseinrichtung liegt eine Information vor, welchem Ort bzw. welchem Winkel ein vom Empfänger erzeugtes Signal zuzuordnen ist. Auch ist die Verwendung einer Reihe von nebeneinander angeordneten Sendern und/oder Empfängern denkbar. Es besteht auch die Möglichkeit, einen Laser-Entfernungssensor zu verwenden, bei dem nicht der Sender und/oder Empfänger gedreht wird, sondern ein stufenlos bzw. in Stufen rotierender Spiegel zur Abtastung des Sichtbereichs dient. Er kann einen Winkelbereich von bis zu 180° abtasten. Derartige Sensoren sind von der Fa. Sick AG, D-72796 Reute unter der Bezeichnung LMS erhältlich.

Der Empfänger ist eingerichtet, die Entfernung eines Punktes, dem das jeweilige Ausgangssignal des Empfänger zuzuordnen ist, vom Empfänger bzw. Sender basierend auf einer Laufzeitmessung zu ermitteln. Durch Abtasten oder Abrastern eines vor der Erntemaschine liegenden Bereichs wird ein Profil des Pflanzenbestandes ermittelt. Der Empfänger ermittelt außerdem die Intensität oder Amplitude der reflektierten Wellen, die von der Anzahl der Pflanzen pro Flächeneinheit und der Abmessungen der Pflanzen abhängt. Die gemessene Intensität wird bei der Ermittlung der Menge der Pflanzen berücksichtigt, indem die Dichte der Pflanzen anhand der im Pflanzenbestand gemessenen Intensität bestimmt und die Menge der Pflanzen anhand der gemessenen Querschnittsfläche und der gemessenen Dichte der Pflanzen ermittelt werden. In der Auswertungseinrichtung wird eine Information über die Breite und die Höhe des Pflanzenbestandes generiert, die in Verbindung mit der gemessenen Intensität der von den Pflanzen reflektierten Wellen eine präzise Bestimmung der Menge ermöglicht.

Im Rahmen des erfindungsgemäßen Gedankens wird unter Menge jegliche Information verstanden, aus der eine Angabe über das Volumen der auf einer Flächeneinheit stehenden oder liegenden Pflanzen ableitbar ist. Die Menge kann somit in Kubikmetern des Pflanzenvolumens je Quadratmeter des Felds gemessen werden, obwohl auch andere Maßeinheiten denkbar sind. Es ist beliebig, ob die Menge explizit ausgerechnet und in irgendeiner Form ausgegeben, als Zwischenschritt in einer weiteren Berechnung verwendet oder in eine Berechnung einer von der Menge direkt oder indirekt abhängigen Größe eingeht. So kann aus den Signalen des Empfängers bei bekannter Breite einer Erntegutaufnahmeeinrichtung und bekannter Vortriebsgeschwindigkeit einer Erntemaschine ein (zu erwartender) Gutdurchsatz bestimmt werden.

Auf diese Weise wird eine exakte Erfassung der Menge der Pflanzen ermöglicht. Anhand der vorausschauend gemessenen Menge kann bei bekannter Breite der Gutaufnahmeeinrichtung die zu erwartende Auslastung der Erntemaschine und/oder die zu einer erwünschten Auslastung führende Vortriebsgeschwindigkeit bestimmt werden. Die Messung erfolgt zweckmäßigerweise im Abstand vor der Erntemaschine, so dass bei Pflanzenbestandsdichtenänderungen eine rechtzeitige Anpassung der Vortriebsgeschwindigkeit möglich wird. Dies erhöht den Fahrkomfort und vermeidet kritische Situationen, in denen die Maschine zum Stopfen neigt. Auch können die Förder- und Trennprozesse in einer Erntemaschine rechtzeitig an die kommenden Durchsätze angepasst werden, so dass sich das Ernteergebnis verbessert. Besonderes Augenmerk liegt auf der Vermeidung von Verstopfungen durch übermäßigen Gutdurchsatz.

Auch die Feuchtigkeit der Pflanzen kann durch einen geeigneten, an sich bekannten Sensor erfasst werden, dessen Ausgangssignale der Auswertungseinrichtung zugeführt werden. Der Sensor kann in der Erntemaschine angeordnet sein und die Feuchtigkeit bereits geernteter Pflanzen erfassen. Denkbar ist auch die Verwendung eines berührungslos wirkenden Sensors, der beispielsweise mit Infrarotwellen arbeitet und die Feuchtigkeit der Pflanzen vor dem Erntevorgang erfasst. Die Feuchtigkeit enthält eine Information über die Dichte des Pflanzenbestandes, d. h. ihre Masse je Volumeneinheit. Anhand der Messwerte der Menge und der Feuchtigkeit kann somit die Massendichte (in Einheiten von Pflanzenmasse je Flächeneinheit) der Pflanzen bestimmt werden. Bei bekannter Breite einer Erntegutaufnahmeeinrichtung und Vortriebsgeschwindigkeit kann der zu erwartende Massendurchsatz bestimmt werden.

Staub in der Luft und auf den Pflanzen sind Störgrößen, deren Einfluss durch Vergleich mit in der Erntemaschine gemessenen Gutdurchsätzen überwiegend eliminiert werden kann. Daher ist bevorzugt, die Auswertungseinrichtung mit einem zusätzlichen Gutdurchsatzsensor zu verbinden, der den Gutdurchsatz in der Erntemaschine misst. Derartige Gutdurchsatzsensoren sind bereits hinlänglich bekannt; so kommen beispielsweise Sensoren in Frage, die das Antriebsmoment oder den Schlupf an der Dreschtrommel oder am Strohhäcksler messen. Auch Taster am Schrägförderer, Prallbleche im Körnerelevator, Mikrowellensensoren im Gutflussbereich oder den Abstand zwischen Vorpresswalzen messende Sensoren sind verwendbar.

Die aus den Messwerten des Empfängers abgeleiteten Gutdurchsätze und die vom Gutdurchsatzsensor gemessenen Gutdurchsätze können verglichen werden. Bei einer Abweichung zwischen den Messwerten für den Gutdurchsatz kann eine Fehlermeldung abgegeben werden, die der Bediener zum Anlass nehmen kann, den Sender und/oder den Empfänger zu reinigen.

Das Gut, dem das vom Empfänger gemessene Signal entspricht, kommt in der Regel erst zeitverzögert mit dem Gutdurchsatzsensor in der Erntemaschine in Wechselwirkung. Daher ist es angebracht, die Zeitverzögerung zwischen den beiden Messungen in der Auswertungseinrichtung zu berücksichtigen.

Denkbar ist auch, den Messwert des Gutdurchsatzsensors zur Kalibrierung des aus den Signalen des Empfängers berechneten Mengenwerts zu nutzen. Dabei ist eine Kalibrierung möglich, bei der ein mathematischer Zusammenhang beispielsweise in Form einer Korrekturtabelle oder -kurve zwischen dem aus dem Messwert des Empfängers ermittelten Mengenwert und dem Messwert des Gutdurchsatzsensors ermittelt wird. Dabei kann der Zusammenhang nach einem bestimmten Zeitablauf völlig neu ermittelt werden, was den momentanen Bedingungen (z. B. optische Eigenschaften der Pflanzen, wie sie durch Wetterbedingungen, Tageszeit, Feuchtigkeit, Pflanzensorte, Bodenart und -zustand usw. bedingt sind, sowie Zustand von Sender und Empfänger) am besten Rechnung trägt, obwohl auch eine Berücksichtigung der Historie, d. h. Ermittlung des Zusammenhangs über einen langen Zeitraum, beispielsweise nach Art eines Expertensystems, möglich ist, wobei der Auswertungseinrichtung zweckmäßigerweise zumindest eine Information über die Art der Pflanzen vorliegen kann. Der aus den Signalen des Empfängers generierte Mengenwert wird anhand des ermittelten Zusammenhangs umgerechnet, um einen korrigierten Wert zu erhalten.

Bei der Messung und/oder Kalibrierung nach den beschriebenen Verfahren kann auch die Schnitthöhe des Schneidwerkes zu berücksichtigt werden, die durch Sensoren am Schneidwerk selbst oder durch den Winkel des Schrägförderers gemessen wird. Die Schnitthöhe beeinflusst die Menge des aufgenommenen Strohs, nicht aber des Korns. Werden Gutdurchsatz-Sensoren verwendet, die nur den Korndurchsatz messen, ist diese Korrektur empfehlenswert.

Die Auswertungseinrichtung ist, wie oben dargelegt, zur Erkennung von Bestandsgrenzen geeignet. Sie kann somit mit einer Lenkeinrichtung verbunden sein und eine Erntemaschine selbsttätig entlang einer Bestandskante führen.

Weiterhin können die von der Auswertungseinrichtung bereitgestellten Mengenwerte zur Vorgabe der Vortriebsgeschwindigkeit einer Erntemaschine dienen. Sie können auch zur Einstellung der Geschwindigkeit einer Gutfördereinrichtung (beispielsweise eines Schrägförderers) oder von Parametern von Gutbearbeitungseinrichtungen (z. b. Dreschtrommelspalt, Dreschtrommeldrehzahl) dienen. Auch zur georeferenzierten Erfassung der Erntegutmengen zu Zwecken der teilflächenspezifischen Bewirtschaftung können die Mengenwerte dienen.

Die erfindungsgemäße Vorrichtung kann insbesondere an Erntemaschinen Verwendung finden, beispielsweise Mähdreschern oder Feldhäckslern.

In den Zeichnungen ist ein nachfolgend näher beschriebenes Ausführungsbeispiel der Erfindung dargestellt. Es zeigt:
- Fig. 1: eine Seitenansicht einer Erntemaschine mit einer erfindungsgemäßen Vorrichtung zur Messung der Menge von auf einem Feld stehenden Pflanzen;
- Fig. 2: ein Blockdiagramm der Vorrichtung;
- Fig. 3: ein Diagramm, das von einem Empfänger gemessene Entfernungen schematisch wiedergibt;
- Fig. 4: ein Diagramm, das von einem Empfänger gemessene Intensitäten schematisch wiedergibt; und
- Fig. 5: ein Flussdiagramm, nach dem die Vorrichtung arbeitet.

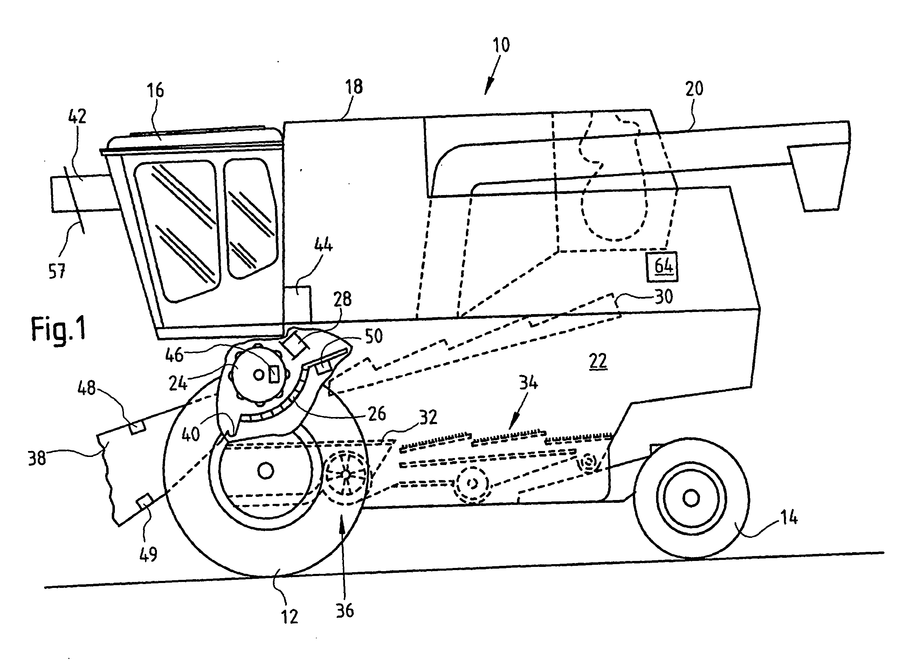

Eine in Figur 1 gezeigte Erntemaschine 10 in der Form eines Mähdreschers ist auf vorderen angetriebenen und rückwärtigen lenkbaren Rädern 12 bzw. 14 getragen und weist eine Fahrerkabine 16 auf, von der aus sie von einem Fahrer bedient werden kann. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Schüttler 30 auf den Boden abgelegt werden und leichte Bestandteile mittels eines Gebläses 36 von den Sieben 34 ebenfalls auf den Boden geblasen werden. Auf dem Boden liegendes oder stehendes Gut wird über einen Schrägförderer 38 und eine Steinfangmulde 40 der Dreschtrommel 24 zugeführt, nachdem es von einer nicht gezeigten Erntegutbergungsvorrichtung vom Boden aufgenommen worden ist.

An der Vorderseite der Fahrerkabine 16 ist eine Laser-Messeinrichtung 42 angeordnet, die mit einer Auswertungseinrichtung 44 verbunden ist. Letztere ist weiterhin mit einem im Schrägförderer 38 angeordneten Gutdurchsatzsensor 48 verbunden, der eingerichtet ist, die Dicke der im Schrägförderer 38 in die Erntemaschine 10 eingezogenen Gutmatte zu messen. Ein Geschwindigkeitssensor 49 erfasst die Fördergeschwindigkeit des Schrägförderers 38. Stromab der Dreschtrommel 24 ist ein Feuchtigkeitssensor 50 angeordnet, der mit der Auswertungseinrichtung 44 verbunden und eingerichtet ist, in an sich bekannter Weise mit Infrarotstrahlen die Feuchtigkeit der aufgenommenen Pflanzen zu messen. Die Auswertungseinrichtung 44 ist weiterhin mit einem Antrieb 46 der Dreschtrommel 24 und einem Variator 64 (beispielsweise eine Verstelleinrichtung für eine Taumelscheibe einer Hydraulikpumpe, die hydraulikflüssigkeitsleitend mit einem Hydraulikmotor verbunden ist, der die Räder 12 antreibt) verbunden, der zur Einstellung der Vortriebsgeschwindigkeit der Erntemaschine 10 eingerichtet ist.

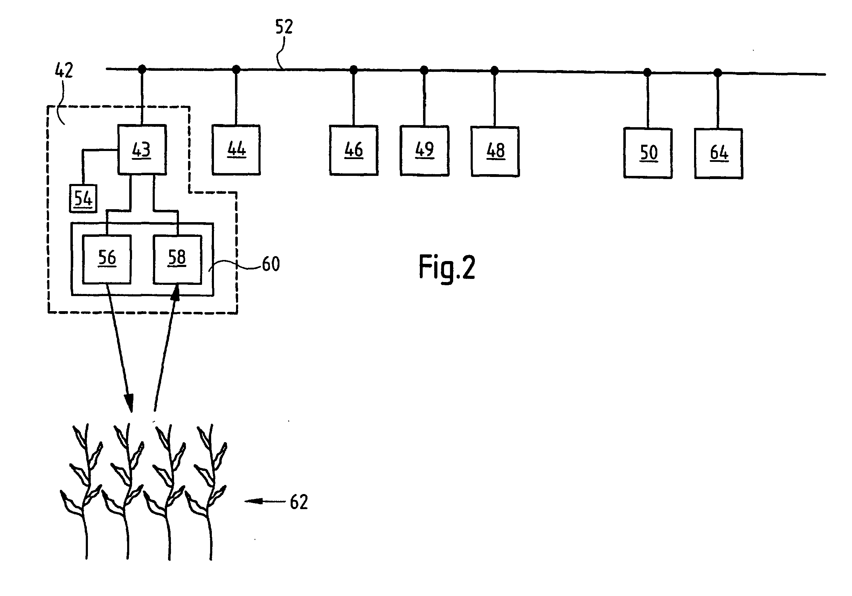

Anhand der Figur 2 ist erkennbar, dass die Laser-Messeinrichtung 42, die Auswertungseinrichtung 44, der Antrieb 46, der Gutdurchsatzsensor 48, der Geschwindigkeitssensor 49, der Feuchtigkeitssensor 50 und der Variator 64 durch einen Bus 52 verbunden sind. Dabei kann es sich um einen CAN- oder LBS-Bus handeln.

Die Laser-Messeinrichtung 42 umfasst eine Steuerung 43, die mit einem Sender 56, einem Empfänger 58 und einem Schwenkmotor 54 verbunden ist. Der Sender 56 und der Empfänger 58 sind auf einem Schwenktisch 60 angeordnet, der durch den Schwenkmotor 54 um eine Achse 57 (s. Figur 1) hin- und her schwenkbar ist. Die vom Sender 56 abgestrahlten elektromagnetischen (Licht-) Wellen, die im sichtbaren Bereich oder darüber oder darunter liegen können, erreichen den Erdboden im Abstand von einigen Metern (beispielsweise 10 m) in der Fahrtrichtung der Erntemaschine 10 vor der Erntegutbergungsvorrichtung. Der Empfänger 58 erfasst die vom Sender 56 abgestrahlten Wellen, die vom Erdboden oder gegebenenfalls darauf stehenden Pflanzen 62 oder anderen Gegenständen reflektiert werden. Da die vom Sender 56 abgestrahlten Wellen amplitudenmoduliert sind, ist über eine Laufzeitmessung eine Erfassung des Abstands zwischen der Laser-Messeinrichtung 42 und dem Punkt, an dem die Wellen reflektiert wurden, möglich. Der Empfänger 58 stellt ein Ausgangssignal bereit, das zusätzlich zur Laufzeit eine Information über die Intensität (Amplitude) der empfangenen Wellen beinhaltet. Der Schwenkmotor 54 ist ein Schrittmotor und verschwenkt den Schwenktisch 60 kontinuierlich um einen Winkelbereich von beispielsweise 30° um die Achse 57 hin und her. Die Steuerung 43 ist eingerichtet, für jeden Schwenkwinkel des Schwenktischs 60 den jeweiligen Winkel, den Abstand vom Reflexionspunkt und die Intensität der vom Empfänger 58 aufgenommenen Wellen zu erfassen. Anschließend wird der Schwenkmotor 54 aktiviert und der Schwenktisch 60 in eine andere Stellung verbracht. Der Steuerung 43 liegt eine Information über den jeweiligen Winkel des Schwenktischs 60 vor, da sie den Schwenkmotor 54 steuert. Denkbar wäre auch ein separater Sensor zur Erfassung des Schwenkwinkels, wobei der Schrittmotor durch einen beliebigen Motor ersetzt werden kann. Auch der oben beschriebene Sensor mit einem rotierenden Spiegel ist verwendbar.

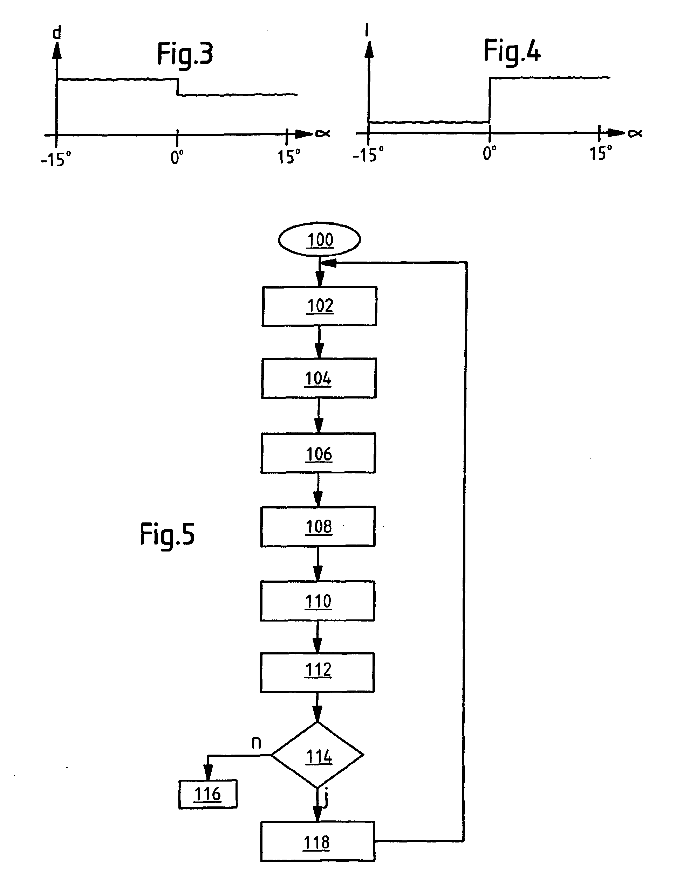

In den Figuren 3 und 4 sind Beispiele für Messwerte des Empfängers 58 wiedergegeben. Bei negativen Winkeln, d. h. bei links von der Fahrtrichtung liegendem Erfassungsbereich der Laser-Messeinrichtung 42 ist der in Figur 3 auf der Y-Achse aufgetragene gemessene Abstand d konstant und relativ groß und sinkt ab einem Winkel von etwa 0° (Vorwärtsfahrtrichtung und Längsmittelachse der Erntemaschine) in einer Stufe auf einen ebenfalls konstanten, aber geringeren Wert ab. Die in Figur 4 auf der Y-Achse aufgetragene, gemessene Intensität I ist bei negativen Winkeln konstant und relativ niedrig, nimmt bei etwa 0° stufenförmig zu und ist darüber ebenfalls konstant, aber höher. Die in den Figuren 3 und 4 dargestellten Diagramme entsprechen einem Feld, bei dem nur im Bereich oberhalb des Winkels von 0° - d. h. rechts von der Längsmittelachse der Erntemaschine 10 - Pflanzen stehen, denn dort ist der Abstand d zur Laser-Messeinrichtung 42 geringer. Wo Pflanzen stehen, ist die Reflektivität höher als auf dem freien Erdboden, da die Laser-Messeinrichtung mit Infrarotlicht arbeitet, das von den Pflanzen 62 in höherem Maß als vom Erdboden reflektiert wird. Bei einem Schwenkwinkel von 0° liegt die Erntegutkante.

In Figur 5 ist ein Flussdiagramm dargestellt, nach dem die Auswertungseinrichtung 44 arbeitet. Nach dem Start in Schritt 100 wird in Schritt 102 die Steuerung 43 veranlasst, den Schwenkmotor 54 in Betrieb zu setzen, so dass die Laser-Messeinrichtung 42 stufenweise einen bestimmten Winkelbereich vor der Erntemaschine 10 überstreicht. Dabei werden die jeweiligen Schwenkwinkel, Abstandsmesswerte und Intensitätsmesswerte abgespeichert und in Schritt 104 an die Auswertungseinrichtung 44 übertragen.

In Schritt 106 wird anhand der Messwerte die Menge der auf dem Feld stehenden Pflanzen 62 berechnet. Dabei wird zunächst aus den Abstandsmesswerten die Kontur der Pflanzen 62 ermittelt, d. h. unter Berücksichtigung der Geometrie der gesamten Messanordnung einschließlich ihrer Anbringung an der Erntemaschine 10 wird die vertikale Querschnittsfläche (d. h. die Kontur) der stehenden Front der Pflanzen 62 ermittelt. Diese Berechnung kann wie in der DE 197 43 884 A beschrieben erfolgen.

Anhand der gemessenen Intensität erfolgt im Schritt 108 eine Berücksichtigung der Dichte der Pflanzen, die sich aus der im Pflanzenbestand gemessenen Intensität und der Intensität beim Abrastern des Erdbodens (bzw. der Differenz der beiden Intensitäten) bestimmen lässt. Die Menge lässt sich dann aus der Breite und Höhe bzw. Querschnittsfläche und der Dichte der Pflanzen (durch Integration der Dichte über die Fläche) ermitteln. Die einem Durchlauf der Laser-Messeinrichtung 42 über den Winkelbereich zuzuordnende Menge wird im Schritt 110 abgespeichert, wobei eine Information über den Zeitpunkt und/oder die Position, an dem die Messung erfolgte, mit abgespeichert wird. Der Zeitpunkt kann mit einer entsprechenden Uhr ermittelt werden, die Position mit einem Positionsbestimmungssystem wie GPS.

Im Schritt 112 wird der Durchsatz in der Erntemaschine 10 mit dem Gutdurchsatzsensor 48 und dem Geschwindigkeitssensor 49 gemessen. Der Durchsatz hängt von der bekannten Breite des Schrägförderers 38, der mit dem Gutdurchsatzsensor 48 gemessenen Dicke der Gutmatte und der Fördergeschwindigkeit des Schrägförderers 38 ab, die mit dem Geschwindigkeitssensor 49 gemessen wird. Aus den Messwerten der genannten Sensoren wird der Durchsatz (Volumen pro Zeiteinheit) bestimmt.

In Schritt 114 wird der in Schritt 112 bestimmte Durchsatz in der Erntemaschine mit einem theoretischen Durchsatz verglichen. Der theoretische Durchsatz wird anhand der in Schritt 110 abgespeicherten Menge und der Vortriebsgeschwindigkeit der Erntemaschine 10 berechnet, wobei die abgespeicherten Werte verwendet werden, die dem Zeitpunkt bzw. der Position entsprechen, an der die Pflanzen 92 stehen, deren Durchsatz in Schritt 112 in der Erntemaschine gemessen wurde. Falls der Vergleich in Schritt 114 keine (zumindest näherungsweise) Übereinstimmung der beiden Werte ergibt, folgt Schritt 116, in dem eine Fehlermeldung abgegeben wird. Anhand der Fehlermeldung kann die Bedienungsperson erkennen, dass eine Überprüfung der Laser-Messeinrichtung 42 erforderlich ist. Auch ist dann eine manuelle Einstellung der Vortriebsgeschwindigkeit und der übrigen Parameter sinnvoll, die ansonsten automatisch eingestellt werden können.

Stimmen die Werte überein, folgt Schritt 118, in dem die Auswertungseinrichtung 44 anhand der in Schritt 110 abgespeicherten Mengenwerte über den Variator 64 die Vortriebsgeschwindigkeit der Erntemaschine 10 auf einen Wert einstellt, der einer optimalen Auslastung der Erntemaschine 10 entspricht. Dabei wird der Zeitraum berücksichtigt, bis die Erntemaschine 10 die Stelle erreicht, an der die Pflanzen 62 stehen, die einem gemessenen Mengenwert entsprechen. Außerdem wird die durch die Auswertungseinrichtung über den Antrieb 46 die Dreschtrommeldrehzahl auf einen von der in Schritt 110 gemessenen Menge und der mit dem Feuchtigkeitssensor 50 gemessenen Feuchtigkeit abhängigen Wert eingestellt.

Auf Schritt 118 folgt wieder Schritt 102. Auf diese Weise wird kontinuierlich eine Reihe von Messwerten der Menge erzeugt, die unter Berücksichtigung der Vortriebsgeschwindigkeit der Erntemaschine zeitverzögert zur Vortriebsgeschwindigkeitssteuerung verwendet wird.

## Patentansprüche

1. Vorrichtung zur Messung der Menge von auf einem Feld stehenden oder liegenden Pflanzen (62), mit:
einem Sender (56), der eingerichtet ist, elektromagnetische Wellen abzustrahlen,
einem orts- und/oder winkelauflösend arbeitenden Empfänger (58), der eingerichtet ist, die vom Sender (56) abgestrahlten und von den Pflanzen (62) reflektierten Wellen zu empfangen,
und einer Auswertungseinrichtung (44), die eingerichtet ist, anhand von Signalen des Empfängers (58) die Menge der auf dem Feld stehenden Pflanzen (62) zu ermitteln,
wobei der Empfänger (58) eingerichtet ist, der Auswertungseinrichtung (44) auf einer Laufzeitmessung basierende Signale zuzuführen, die eine Information über den Abstand der Pflanzen (62) vom Empfänger (58) und/oder Sender (56) enthalten,
und die Auswertungseinrichtung (44) eingerichtet ist, die Information über den Abstand der Pflanzen (62) vom Empfänger (58) und/oder Sender (56) bei der Ermittlung der Menge zu berücksichtigen, indem sie die vertikale Querschnittsfläche der Pflanzen (62) ermittelt,
**dadurch gekennzeichnet, dass** der Empfänger (58) betreibbar ist, der Auswertungseinrichtung (44) Signale zuzuführen, die eine Information über die Intensität der empfangenen Wellen enthalten,
und dass die Auswertungseinrichtung (44) betreibbar ist, die Information über die Intensität der Wellen bei der Ermittlung der Menge zu berücksichtigen, indem sie die Dichte der Pflanzen (62) anhand der im Pflanzenbestand gemessenen Intensität bestimmt und die Menge der Pflanzen (62) anhand der gemessenen Querschnittsfläche und der gemessenen Dichte der Pflanzen (62) ermittelt.

2. Vorrichtung nach Anspruch 1, **dadurch gekennzeichnet, dass** die Auswertungseinrichtung (44) mit einem Feuchtigkeitssensor (50) verbunden ist, der eingerichtet ist, die Feuchtigkeit der Pflanzen zu messen.

3. Vorrichtung nach Anspruch 2, **dadurch gekennzeichnet, dass** die Auswertungseinrichtung (44) betreibbar ist, die Masse des Pflanzenbestandes zu errechnen.

4. Vorrichtung nach einem der Ansprüche 1 bis 3, **dadurch gekennzeichnet, dass** die berechnete Menge und/oder Masse des Pflanzenbestandes anhand einer direkt oder indirekt gemessenen Schnitthöhe korrigiert wird und daraus die tatsächlich aufgenommene Menge und/oder Masse des Pflanzenbestandes berechnet wird.

5. Vorrichtung nach einem der Ansprüche 1 bis 4, **dadurch gekennzeichnet, dass** die Auswertungseinrichtung (44) mit einem Gutdurchsatzsensor (48) verbunden ist, der eingerichtet ist, den Gutdurchsatz in einer Erntemaschine (10) zu messen.

6. Vorrichtung nach Anspruch 5, **dadurch gekennzeichnet, dass** die Auswertungseinrichtung (44) eingerichtet ist, den Messwert des Gutdurchsatzsensors (48) mit einem aus den Signalen des Empfängers (58) berechneten Wert zu vergleichen.

7. Vorrichtung nach Anspruch 5 oder 6, **dadurch gekennzeichnet, dass** die Zeitverzögerung des Wegs der Pflanzen (62) zwischen dem Empfänger (58) und dem Gutdurchsatzsensor (48) berücksichtigt wird.

8. Vorrichtung nach einem der Ansprüche 5 bis 7, **dadurch gekennzeichnet, dass** die Auswertungseinrichtung (44) eingerichtet ist, den Messwert des Gutdurchsatzsensors (48) zur Kalibrierung des aus den Signalen des Empfängers (58) berechneten Mengenwerts zu verwenden.

9. Vorrichtung nach einem der Ansprüche 1 bis 8, **dadurch gekennzeichnet, dass** die Auswertungseinrichtung (44) mit einer Lenkeinrichtung verbunden ist.

10. Vorrichtung nach einem der Ansprüche 1 bis 9, **dadurch gekennzeichnet, dass** die Auswertungseinrichtung (44) mit einer Geschwindigkeitseinstelleinrichtung (64) und/oder einer Einrichtung zur Einstellung einer Gutbearbeitungs- und/oder Gutfördereinrichtung und/oder einer Aufzeichnungseinrichtung zur georeferenzierten Aufzeichnung der Mengenwerte verbunden ist.

11. Erntemaschine (10) mit einer Vorrichtung nach einem der Ansprüche 1 bis 10.

## Claims

1. Apparatus for measuring the quantity of plants (62) standing or lying in a field, comprising:
a transmitter (56), which is designed to emit electromagnetic waves,
a receiver (58), which operates on a position-resolving and/or angle-resolving basis and is designed to receive waves emitted by the transmitter (56) and reflected by the plants (62),
and an evaluating device (44), which is designed to determine, on the basis of signals of the receiver (58), the quantity of plants (62) standing in the field,
wherein the receiver (58) is designed to supply the evaluating device (44) with signals based on a transit time measurement, which signals contain information on the distance of the plants (62) from the receiver (58) and/or the transmitter (56),
and the evaluating device (44) is designed to take into account, when determining the quantity, the information on the distance of the plants (62) from the receiver (58) and/or the transmitter (56), by establishing the vertical cross-sectional area of the plants (62),
**characterized in that** the receiver (58) can be operated to supply the evaluating device (44) with signals containing information on the intensity of the received waves,
and **in that** the evaluating device (44) can be operated to take into account, when determining the quantity, the information on the intensity of the waves, by establishing the density of the plants (62) on the basis of the intensity measured in the plant population and establishing the quantity of the plants (62) on the basis of the measured cross-sectional area and the measured density of the plants (62).

2. Apparatus according to Claim 1, **characterized in that** the evaluating device (44) is connected to a moisture sensor (50), which is designed to measure the moisture of the plants.

3. Apparatus according to Claim 2, **characterized in that** the evaluating device (44) can be operated to calculate the mass of the plant population.

4. Apparatus according to one of Claims 1 to 3, **characterized in that** the calculated quantity and/or mass of the plant population is adjusted on the basis of a directly or indirectly measured cut height and, from this, the actually gathered quantity and/or mass of the plant population is calculated.

5. Apparatus according to one of Claims 1 to 4, **characterized in that** the evaluating device (44) is connected to a crop throughput sensor (48), which is designed to measure the crop throughput in a harvester (10).

6. Apparatus according to Claim 5, **characterized in that** the evaluating device (44) is designed to compare the measurement value of the crop throughput sensor (48) with a value calculated from the signals of the receiver (58).

7. Apparatus according to Claim 5 or 6, **characterized in that** the time lag associated with the travel of the plants (62) between the receiver (58) and the crop throughput sensor (48) is taken into account.

8. Apparatus according to one of Claims 5 to 7, **characterized in that** the evaluating device (44) is designed to use the measurement value of the crop throughput sensor (48) to calibrate the quantity value calculated from the signals of the receiver (58).

9. Apparatus according to one of Claims 1 to 8, **characterized in that** the evaluating device (44) is connected to a steering gear.

10. Apparatus according to one of Claims 1 to 9, **characterized in that** the evaluating device (44) is connected to a speed-setting device (64) and/or a device for adjusting a crop-processing and/or crop-conveying device and/or a recording device for the georeferenced recording of the quantity values.

11. Harvester (10) having an apparatus according to one of Claims 1 to 10.

## Revendications

1. Dispositif pour mesurer la quantité de plantes (62) présentes ou reposant sur un champ comprenant :
un émetteur (56) qui est conçu pour émettre des ondes électromagnétiques,
un récepteur (58) fonctionnant avec résolution de l'emplacement et/ou de l'angle, lequel est conçu pour recevoir les ondes émises par l'émetteur (56) et réfléchies par les plantes (62),
et un dispositif d'interprétation (44) qui est conçu pour déterminer la quantité de plantes (62) présentes ou reposant sur le champ au moyen des signaux du récepteur (58),
le récepteur (58) étant conçu pour acheminer au dispositif d'interprétation (44) des signaux qui se basent sur une mesure du temps de propagation qui contiennent une information sur la distance entre les plantes (62) et le récepteur (58) et/ou l'émetteur (56),
et le dispositif d'interprétation (44) étant conçu pour tenir compte de l'information sur la distance entre les plantes (62) et le récepteur (58) et/ou l'émetteur (56) lors de la détermination de la quantité en déterminant la surface de la section transversale des plantes (62),
**caractérisé en ce que** le récepteur (58) peut être utilisé pour acheminer au dispositif d'interprétation (44) des signaux contenant une information sur l'intensité des ondes reçues, et **en ce que** le dispositif d'interprétation (44) peut être utilisé pour tenir compte de l'information sur l'intensité des ondes lors de la détermination de la quantité **en ce qu'**il détermine la densité des plantes (62) au moyen de l'intensité mesurée dans la végétation présente et détermine la quantité de plantes (62) au moyen de la surface mesurée de la section transversale et de la densité mesurée des plantes (62).

2. Dispositif selon la revendication 1, **caractérisé en ce que** le dispositif d'interprétation (44) est relié avec un détecteur d'humidité (50) qui est conçu pour mesurer l'humidité des plantes.

3. Dispositif selon la revendication 2, **caractérisé en ce que** le dispositif d'interprétation (44) peut être utilisé pour calculer la masse de la végétation présente.

4. Dispositif selon l'une des revendications 1 à 3, **caractérisé en ce que** la quantité et/ou la masse calculée de la végétation présente est corrigée au moyen d'une hauteur de coupe mesurée directement ou indirectement et la quantité et/ou la masse effectivement relevée de la végétation présente est calculée à partir du résultat.

5. Dispositif selon l'une des revendications 1 à 4, **caractérisé en ce que** le dispositif d'évaluation (44) est relié avec un détecteur de débit de produit (48) qui est conçu pour mesurer le débit de produit dans une moissonneuse (10).

6. Dispositif selon la revendication 5, **caractérisé en ce que** le dispositif d'interprétation (44) est conçu pour comparer la valeur mesurée par le détecteur de débit de produit (48) avec une valeur calculée à partir des signaux du récepteur (58).

7. Dispositif selon la revendication 5 ou 6, **caractérisé en ce que** le retard du trajet des plantes (62) entre le récepteur (58) et le détecteur de débit de produit (48) est pris en compte.

8. Dispositif selon l'une des revendications 5 à 7, **caractérisé en ce que** le dispositif d'interprétation (44) est conçu pour utiliser la valeur mesurée du détecteur de débit de produit (48) pour calibrer la valeur de la quantité calculée à partir des signaux du récepteur (58).

9. Dispositif selon l'une des revendications 1 à 8, **caractérisé en ce que** le dispositif d'interprétation (44) est relié avec un dispositif de direction.

10. Dispositif selon l'une des revendications 1 à 9, **caractérisé en ce que** le dispositif d'interprétation (44) est relié avec un dispositif de réglage de la vitesse (64) et/ou un dispositif de réglage d'un dispositif de traitement de produit et/ou de transport de produit et/ou un dispositif d'enregistrement pour l'enregistrement avec référencement géographique des valeurs de la quantité.

11. Moissonneuse (10) munie d'un dispositif selon l'une des revendications 1 à 10.
